# EUROPÄISCHE PATENTSCHRIFT

(11) **EP 0 862 002 B1**
(45) Veröffentlichungstag und Bekanntmachung des Hinweises auf die Patenterteilung: **06.11.2002**
(21) Anmeldenummer: 98102314.6
(22) Anmeldetag: 11.02.1998
(51) Int. Cl.: F16K 27/00, F16L 25/00, F16L 23/14

(54) **Verbindungseinrichtung für zwei Körper einer fluiddurchströmten Baugruppe**
Connecting system for two bodies of a fluid-traversed assembly
Système de raccordement de deux corps d'ensemble traversé par un écoulement de fluides

(30) Priorität: 26.02.1997 DE 19707630
(43) Veröffentlichungstag der Anmeldung: 02.09.1998
(73) Patentinhaber: FESTO AG & Co, 73734 Esslingen (DE)
(72) Erfinder: Stoll, Kurt, Dr., 73732 Esslingen (DE); Berger, Rolf, 72649 Wolfschlugen (DE); Gebauer, Günter, 73728 Esslingen (DE)
(74) Vertreter: Abel, Martin, Dipl.-Ing.

(56) Entgegenhaltungen:
- EP-A- 0 261 711
- FR-A- 2 470 912
- JP-A- 58 142 084
- US-A- 4 533 020
- US-A- 5 383 689

## Beschreibung

Die Erfindung betrifft eine Anordnung aus zwei Körpern einer insbesondere fluiddurchströmten Baugruppe, insbesondere einer modular aufgebauten Einrichtung zur Druckluftaufbereitung, und einer Verbindungseinrichtung für die zwei Körper mit an quer zur Anbaurichtung der Körper einander entgegengesetzten Körperseiten befindlichen, bei aneinandergesetzten Körpern einander paarweise zugeordneten Haltepartien, und mit in einer Verbindungsstellung an die Paare zugeordneter Haltepartien ansetzbaren Verbindungsgliedern, die mittels einer Spanneinrichtung in einer quer zur Anbaurichtung verlaufenden Spannrichtung mit dem jeweils zugeordneten Paar von Haltepartien verspannbar sind, um zu bewirken, daß die Körper im Bereich ihrer einander zugewandten Fügeflächen gegeneinander gespannt werden.

Eine Anordnung dieser Art geht beispielsweise aus der EP 0 261 711 A2 hervor. Die dort offenbarte Verbindungseinrichtung wird verwendet, um die Gehäusekörper mehrerer zur Druckluftaufbereitung dienender, aufeinanderfolgend angeordneter Einrichtungen paarweise lösbar miteinander zu verbinden. Einrichtungen dieser Art werden auch als Wartungsgeräte bezeichnet, die sich durch das aneinander Anbauen zu modularen Wartungseinheiten zusammenfassen lassen. Die Wartungsgeräte bzw. Wartungseinheiten werden in ein Druckluftnetz eingeschaltet und dienen zur Aufbereitung, also zur Behandlung der Druckluft, wobei sie in der Regel eine Filtereinrichtung, eine Druckeinstelleinrichtung und eine Ölereinrichtung enthalten.

An den jeweils zu verbindenden Körpern befindet sich im Bereich der Fügefläche an einander entgegengesetzten Körperseiten jeweils eine Haltepartie. Bei aneinander gesetzten Körpern kommen diese Haltepartien paarweise benachbart zueinander zu liegen. Um die Körper in der Anbaurichtung zusammenzuhalten, sind klammerähnliche Verbindungsglieder vorhanden, die sich an den entgegengesetzten Körperseiten an die Haltepartiepaare ansetzen lassen und diese dabei übergreifen. Mittels einer Spanneinrichtung, die über an den beiden Verbindungsgliedern angreifende und diese gegeneinanderziehende Spannschrauben verfügt, erfolgt eine Beaufschlagung der Haltepartien, so daß die Gehäusekörper im Fügebereich zusammengespannt werden.

Eine vergleichbare Verbindungseinrichtung zeigt auch die JP 58-142 084 A.

Nachteilig bei den bekannten Verbindungseinrichtungen ist ihre umständliche Handhabung. Man muß zunächst die zu verbindenden Körper in der gewünschten Anbaustellung halten, dann die Verbindungsglieder ansetzen, und letztlich die Spannschrauben anbringen. Dies alles ist insgesamt relativ schwierig, weil gleichzeitig eine Vielzahl von Bauteilen festgehalten werden muß.

Um dieser Problematik zu begegnen, hat man in der US 5 383 689 bereits vorgeschlagen, die zu verbindenden Körper vor dem Anbringen und Betätigen der Spanneinrichtung mittels Zwischenplatten aneinander zu fixieren, die zwischen die benachbarten Körper eingeschoben werden und in Anbaurichtung eine formschlüssige Fixierung der Körper bewirken. Allerdings besteht weiterhin die Gefahr, daß die vorfixierten Körper bei unachtsamer Handhabung vor dem Ansetzen der Spanneinrichtung von der Zwischenplatte abgleiten und herunterfallen, so daß Beschädigungen auftreten können.

Es ist daher die Aufgabe der vorliegenden Erfindung, eine Anordnung der eingangs genannten Art zu schaffen, deren Verbindungseinrichtung sich schneller, einfacher und sicherer handhaben läßt.

Zur Lösung dieser Aufgabe ist vorgesehen, daß an den beiden Körpern im Bereich ihrer einander zugewandten Fügeflächen Kopplungsmittel vorgesehen sind, die vor dem Ansetzen der Verbindungsglieder eine Kopplung der Körper in einer Weise ermöglichen, daß die Körper in der Spannrichtung relativ zueinander verschiebbar und zugleich in Anbaurichtung formschlüssig aneinander fixiert sind, und daß an wenigstens einem der Verbindungsglieder und an der diesem zugewandten Körperseite der Körper Halte- und Sicherungsmittel vorgesehen sind, die bei in Verbindungsstellung befindlichem Verbindungsglied derart zusammenwirken, daß das Verbindungsglied schon vor der Betätigung der Spanneinrichtung an den Körpern gehalten ist und dabei gleichzeitig eine Verschiebesicherung zwischen den beiden Körpern bewirkt.

Die an den Körpern vorgesehenen Kopplungsmittel ermöglichen es nunmehr, die zu verbindenden Körper vor dem Verspannen der Verbindungsglieder vorab in der gewünschten Ausrichtung aneinander vorzufixieren. Durch das anschließende Ansetzen wenigstens eines mit Halte- und Sicherungsmitteln versehenen Verbindungsgliedes wird, soweit noch vorhanden, die relative Beweglichkeit der Körper in der Spannrichtung unterbunden, so daß die Körper zumindest im wesentlichen in der Relativlage positioniert sind, die sie auch nach der Betätigung der Spanneinrichtung einnehmen. Durch die Haltemittel ist gewährleistet, daß das betreffende Verbindungsglied die an die Körper angesetzte Verbindungsstellung auch dann beibehält, wenn man es losläßt. Dadurch hat man, je nach Gegebenheiten, eine Hand frei, um die vorfixierten Körper zu halten und kann mit der anderen Hand die Spanneinrichtung betätigen, wobei die zusammenwirkenden Haltemittel in vorteilhafter Weise dazu beitragen können, das betreffende Verbindungsglied beim Ansetzen der Spanneinrichtung an Ort und Stelle zu halten. Eine einzige Person ist somit ohne weiteres in der Lage, zwei Körper rasch und ohne Beschädigungsgefahr fest aneinander anzubauen. Die Verbindungseinrichtung eignet sich daher vor allem zur lösbaren gegenseitigen Festlegung der Gehäusekörper verschiedener Bestandteile einer Einrichtung zur Druckluftaufbereitung. Als weiteres vorteilhaftes Einsatzgebiet ist die Kopplung von Bauteilen einer Ventilanordnung zu nennen, beispielsweise um Ventile zu Baugruppen zusammenzufassen oder auf Grundplatten zu befestigen.

Vorteilhafte Weiterbildungen der Erfindung sind in den Unteransprüchen aufgeführt.

Es wäre möglich, die zur Verschiebesicherung der Körper dienenden Sicherungsmittel und die zum Halten der an die Körper angesetzten Verbindungsglieder dienenden Haltemittel getrennt auszuführen. Als vorteilhafter wird jedoch eine Ausgestaltung angesehen, bei der die Halte- und Sicherungsmittel als bauliche Einheit ausgeführt sind und eine Doppelfunktion erfüllen.

Von Vorteil ist, wenn das mit Halte- und Sicherungsmitteln versehene Verbindungsglied als Riegelglied ausgebildet ist, dessen Halte- und Sicherungsmittel die an den Körpern angeordneten Halte- und Sicherungsmittel in der Verbindungsstellung quer zur Spannrichtung hintergreifen. Dadurch ergibt sich insbesondere eine durch Formschluß hervorgerufene relative Verschiebesicherung zwischen den zu verbindenden Körpern.

Die Handhabung gestaltet sich besonders einfach, wenn das Riegelglied, in Gebrauchslage der Körper gesehen, von oben her in de Verbindungsstellung einführbar ist und in dieser auf Grund seines Eigengewichts verbleibt. Das Riegelglied kann hier sehr einfach in die gewünschte Stellung eingelegt werden.

Die Spanneinrichtung ist zweckmäßigerweise so ausgestaltet, daß sie im wirksamen Zustand gleichzeitig an beiden Verbindungsgliedern angreift und diese zueinander zieht, so daß sie mit den Haltepartien verspannt werden. Auf diese Weise erübrigt es sich, die Verbindungsglieder jeweils separat mit dem zugeordneten Haltepartiepaar zu verspannen.

In der Regel wird die Verbindungseinrichtung über zwei auf einander entgegengesetzten Körperseiten angeordnete Verbindungsglieder verfügen. Hierbei ist es von Vorteil, wenn lediglich eines dieser Verbindungsglieder mit Halte- und Sicherungsmitteln versehen ist, wobei dieses Verbindungsglied insbesondere an der von der montierenden Person wegweisenden rückwärtigen Körperseite der Körper angeordnet wird. Mangels entsprechender Halte- und Sicherungsmittel läßt sich das andere Verbindungsglied ohne besondere Verriegelungsbewegung sehr einfach an das zugeordnete Haltepartiepaar ansetzen, so daß die Möglichkeit besteht, Spannschrauben der Spanneinrichtung vorab an diesem Verbindungsglied unverlierbar anzubringen.

Im Fügebereich zwischen den zu verbindenden Körpern kann sich eine Dichtungsanordnung befinden, wenn der Übergang miteinander kommunizierender Strömungskanäle abgedichtet werden muß. In diesem Falle ist es vorteilhaft, wenn wenigstens einer der zu verbindenden Körper an mindestens einem der in Spannrichtung weisenden Randbereiche seiner Fügefläche eine Abschrägung aufweist, die das Vorbeischieben an der Dichtungsanordnung erleichtert. Die anfängliche Verschiebekopplung der Körper kann auch dadurch vereinfacht werden, daß die Kopplungsmittel gestalterisch derart aneinander angepaßt sind, daß bei hergestellter formschlüssiger Verbindung vor dem Ansetzen der Verbindungsglieder ein gewisses geringes Bewegungsspiel zwischen den Körpern in der Anbaurichtung vorliegt.

Als Kopplungsmittel sind zweckmäßigerweise paarweise zusammenwirkende, in Spannrichtung ausgerichtete Schienenelemente vorgesehen, die als separate Bauteile ausgeführt und durch Rastverbindungen am betreffenden Körper festgelegt sein können.

Nachfolgend wird die Erfindung anhand der beiliegenden Zeichnung näher erläutert. In dieser zeigen:
- Figur 1: eine fluiddurchströmte Baugruppe mit mehreren, jeweils durch eine erfindungsgemäße Verbindungseinrichtung lösbar miteinander verbundenen Körpern, wobei zwei der Körper und die diesen zugeordnete Verbindungseinrichtung im getrennten Zustand vor dem Aneinandersetzen gezeigt sind,
- Figur 2: einen Querschnitt durch die Anordnung aus Figur 1 gemäß Schnittlinie II-II im Fügebereich, wobei aber lediglich die Verbindungsglieder im Schnitt dargestellt sind und wobei ein mit Halte- und Sicherungsmittel versehenes Verbindungsglied bei eingenommener Verbindungsstellung gezeigt ist,
- Figur 3: den in Figur 2 rechts gelegenen Abschnitt bei in der Grundstellung vor dem Verlagern in die Verbindungsstellung befindlichem Verbindungsglied, wobei strichpunktiert eine mögliche Ausgangsstellung gezeigt ist, ausgehend von der das Verbindungsglied in die Grundstellung gemäß eingezeichnetem Pfeil einschwenkbar ist,
- Figur 4: einen Längsschnitt durch zwei miteinander verbundene Körper mit Blick in Spannrichtung gemäß Schnittlinie IV-IV aus Figur 1,
- Figur 5: einen Querschnitt durch zwei miteinander verbundene Körper im Fügebereich mit Blick rechtwinkelig zur Spannrichtung gemäß Schnittlinie V-V aus Figur 1, und
- Figur 6: eine Seitenansicht im Fügebereich zweier aneinandergesetzter, durch die Kopplungsmittel vorfixierter Körper, wobei strichpunktiert das zugeordnete Verbindungsglied angedeutet ist, mit Blickrichtung gemäß Pfeil VI aus Figuren 1 und 2.

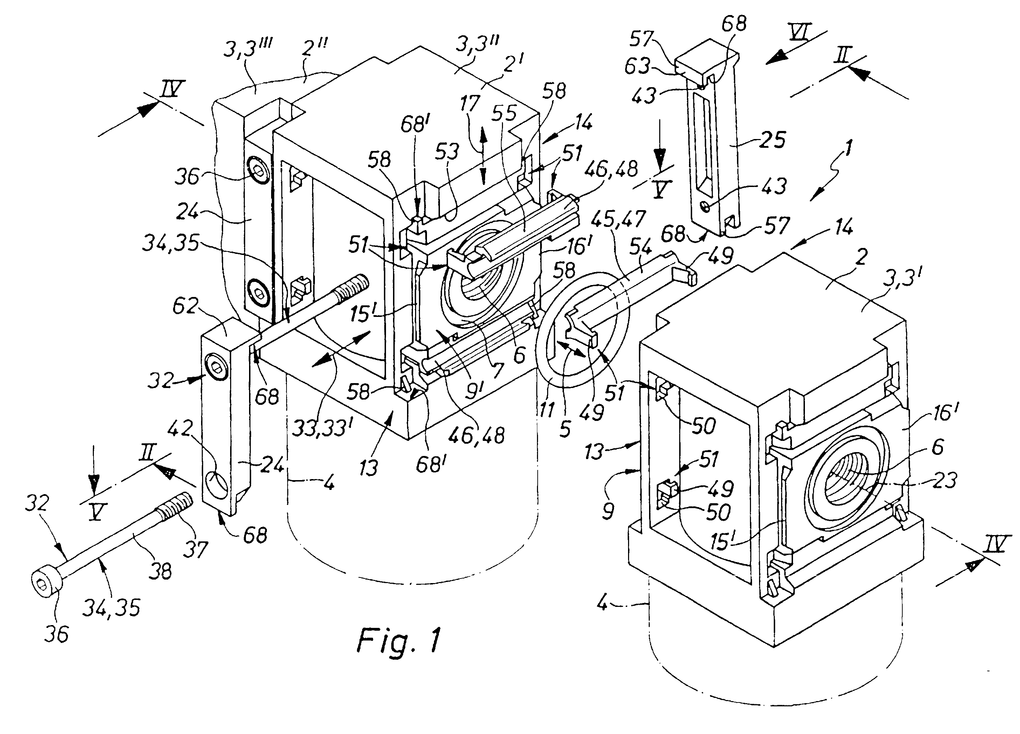

Aus Figur 1 geht schematisch eine in den Verlauf einer nicht näher dargestellten Druckluftleitung eingeschaltete Einrichtung 1 zur Druckluftaufbereitung hervor. Die Einrichtung könnte auch als Wartungseinrichtung oder Konditioniereinrichtung für Druckluft bezeichnet werden. Es handelt sich bei ihr um eine modular aufgebaute, im Betrieb fluiddurchströmte Baugruppe, die beispielsgemäß drei nur schematisch abgebildete Arbeitseinheiten 2, 2', 2'' umfaßt, bei denen es sich um eine Filtereinheit 2, eine Druckregeleinheit 2' und eine Ölereinheit 2'' handeln kann.

Die einzelnen Arbeitseinheiten 2, 2', 2'' verfügen jeweils über einen beispielsgemäß quader- oder würfelähnlichen Grund- oder Gehäusekörper 3, der nachfolgend allgemein nur als "Körper" bezeichnet sei. An dem jeweiligen Körper 3, beispielsweise an seiner Unterseite, kann eine Funktionseinheit 4 angeordnet sein, die zur Vereinfachung nur schematisch angedeutet ist.

Jeder Körper 3 hat einen internen Strömungskanal 6, der an einander entgegengesetzten Stirnflächen des betreffenden Körpers 3 ausmündet. Die Körper 3 lassen sich in beliebiger Anzahl paarweise aneinandersetzen, so daß mehrere in einer Anbaurichtung 5 aufeinanderfolgende und zu einer Baugruppe vereinigte Körper 3 vorliegen. Aneinander angebaute Körper 3 liegen mit einander zugewandten Stirnflächen fest aneinander an, weshalb diese Stirnflächen nachstehend als Fügeflächen 9, 9' bezeichnet sind.

Im zusammengefügten Zustand der Körper 3 können die einzelnen Strömungskanäle 6 einen gemeinsamen durchgehenden Strömungskanal bilden. In dem von einander zugewandten Fügeflächen 9, 9' definierten Fügebereich 10 ist zweckmäßigerweise eine ringförmige Dichtung 11 plaziert, die den Übergang zwischen den miteinander fluchtenden Strömungskanälen 6 abdichtet. Die Dichtung 11 umschließt die Mündungsbereiche der Strömungskanäle 6 in zweckmäßigerweise konzentrischer Anordnung und ist in eine entsprechend geformte Haltenut 7 eingelegt, die in eine der Fügeflächen 9' eingebracht ist. Vor dem Zusammenfügen der Körper 3 steht die Dichtung 11 geringfügig in Anbaurichtung 5 aus der Haltenut 7 und über die zugeordnete Fügefläche 9' vor, so daß sie bei miteinander verbundenen Körpern 3 von der Fügefläche 9 des anderen Körpers unter Herstellung des erforderlichen Dichtkontaktes gepreßt wird.

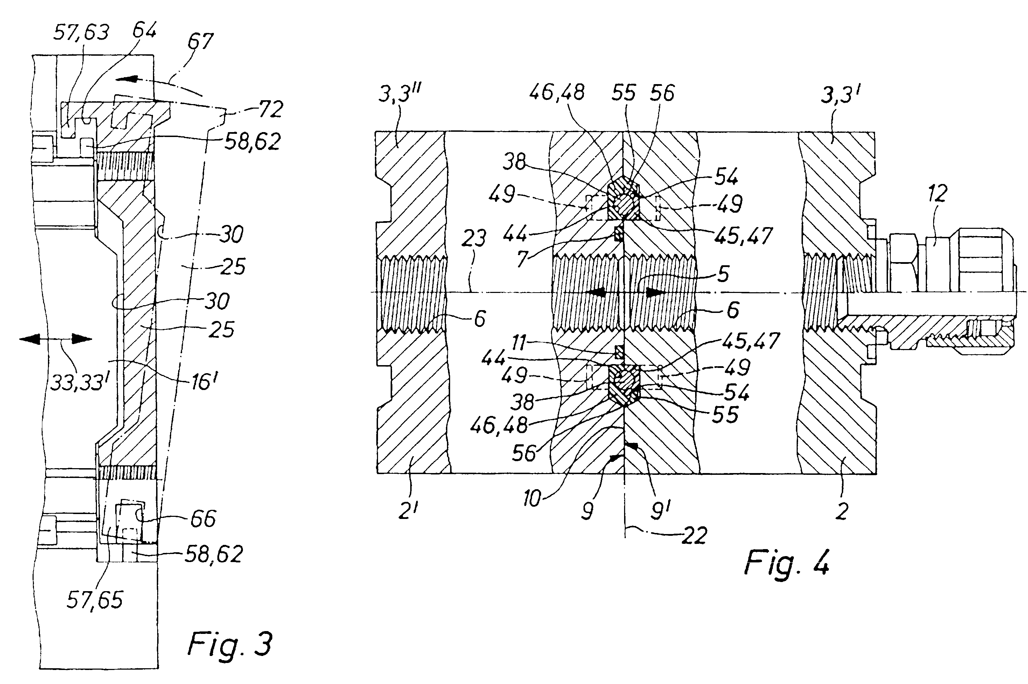

Die Mündungsbereiche der Strömungskanäle 6 können mit Anschlußgewinden versehen sein, die es ermöglichen, an den den Abschluß der Baugruppe bildenden Körpern 3 ein in Figur 4 exemplarisch dargestelltes Anschlußstück 12 festzulegen, das den Anschluß einer weiterführenden Druckmittelleitung gestattet.

Die Körper 3 der verschiedenen Arbeitseinheiten 2, 2', 2'' haben vorzugsweise die gleiche Breite. Dadurch gehen die Flächen der Körperseiten 13, 14, die sich bei zusammengefügter Körperanordnung auf einander entgegengesetzten Längsseiten befinden, fluchtend ineinander über. Herstellungstechnisch bedingt sind die Körper 3 an den vorerwähnten seitlichen Körperseiten, die beim Ausführungsbeispiel eine vordere (13) und eine rückwärtige (14) Körperseite darstellen, mit einer Ausnehmung versehen, die üblicherweise durch eine nicht näher dargestellte Abdeckung verschlossen ist.

Die einzelnen Körper 3 können paarweise mit ihren Fügefläche 9, 9' aneinandergesetzt und in der aneinander gesetzten Stellung lösbar fest miteinander verspannt werden. Die Figur 1 zeigt zwei Körper 3', 3'' im noch getrennten Zustand, wobei der eine dieser Körper 3'' bereits an einen weiteren Körper 3''' angebaut ist.

Jeder Körper 3 besitzt im Bereich seiner beiden quer zur Anbaurichtung 5 einander entgegengesetzten Körperseiten 13, 14 im Bereich seiner beiden Fügeflächen 9, 9' mindestens eine Haltepartie 15, 16; 15', 16'. Bevorzugt ist jeder Fügefläche 9, 9' an jeder Körperseite 13, 14 genau eine solche Haltepartie 15, 16; 15', 16' zugeordnet, die zweckmäßigerweise höhenmittig bezüglich der Höhenrichtung des betreffenden Körpers 3 positioniert ist. Sind die Körper mit ihren Fügeflächen 9, 9' aneinandergesetzt, ergibt sich eine paarweise Zuordnung von Haltepartien 15, 15'; 16, 16' der beiden aneinandergrenzenden Körper 3. Beispielsgemäß liegen die Haltepartien 15, 15'; 16, 16' dabei paarweise aneinander an.

Bevorzugt sind die Haltepartien 15, 15'; 16, 16' wie gezeigt von an den Körpern 3 insbesondere einstückig angebrachten Vorsprüngen gebildet, die eine mit der durch Doppelpfeil 17 angedeuteten Höhenrichtung der Körper 3 zusammenfallende Längserstreckung haben und außerdem quer zur Anbaurichtung 5 vom betreffenden Körper 3 wegragen. Es kann sich um rippenartige Haltepartien handeln.

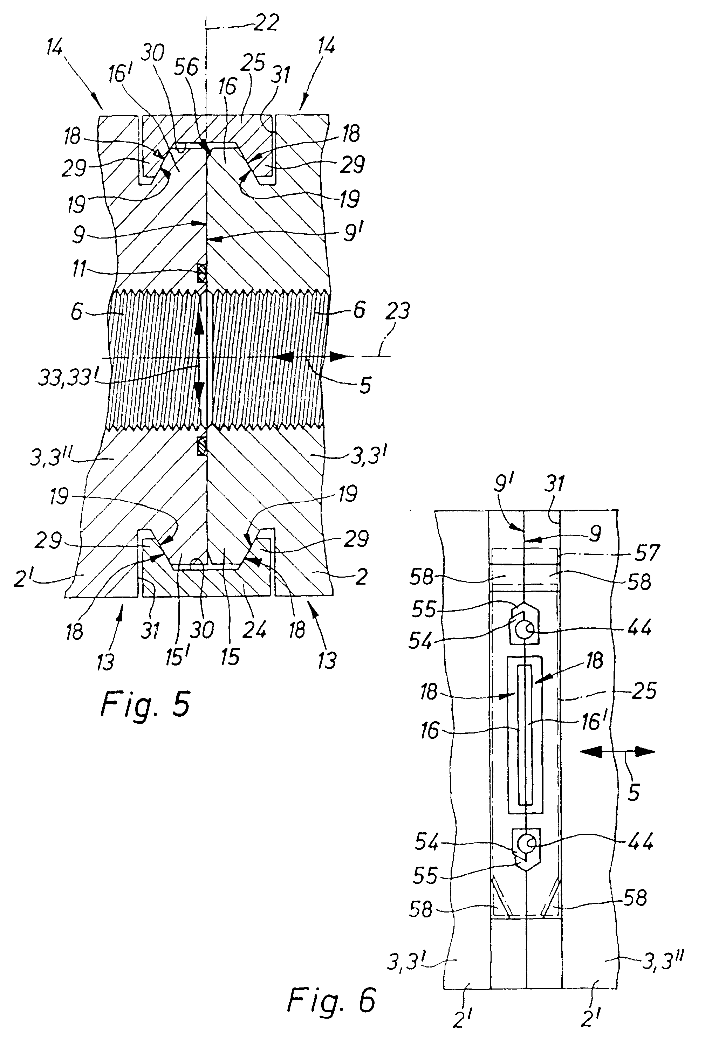

An ihrer der zugeordneten Fügefläche 9, 9' in Anbaurichtung 5 entgegengesetzten Seite ist jede Haltepartie 15, 15'; 16, 16' mit einer ersten Beaufschlagungsfläche 18 versehen. Diese verläuft geneigt zu der durch den Fügebereich 10 definierten, rechtwinkelig zur Anbaurichtung 5 verlaufenden Fügeebene 22 (Figur 5), derart, daß sie sich mit zunehmender Entfernung von der in Anbaurichtung 5 verlaufenden Längsachse 23 des Körpers 3 an die Fügeebene 22 annähert. Die ersten Beaufschlagungsflächen 18 des jeweiligen Haltepartiepaares 15, 15'; 16, 16' laufen daher nach außen hin schräg aufeinander zu, wobei die Haltepartiepaare praktisch einen Höcker bilden, der sich nach aussen hin verjüngt.

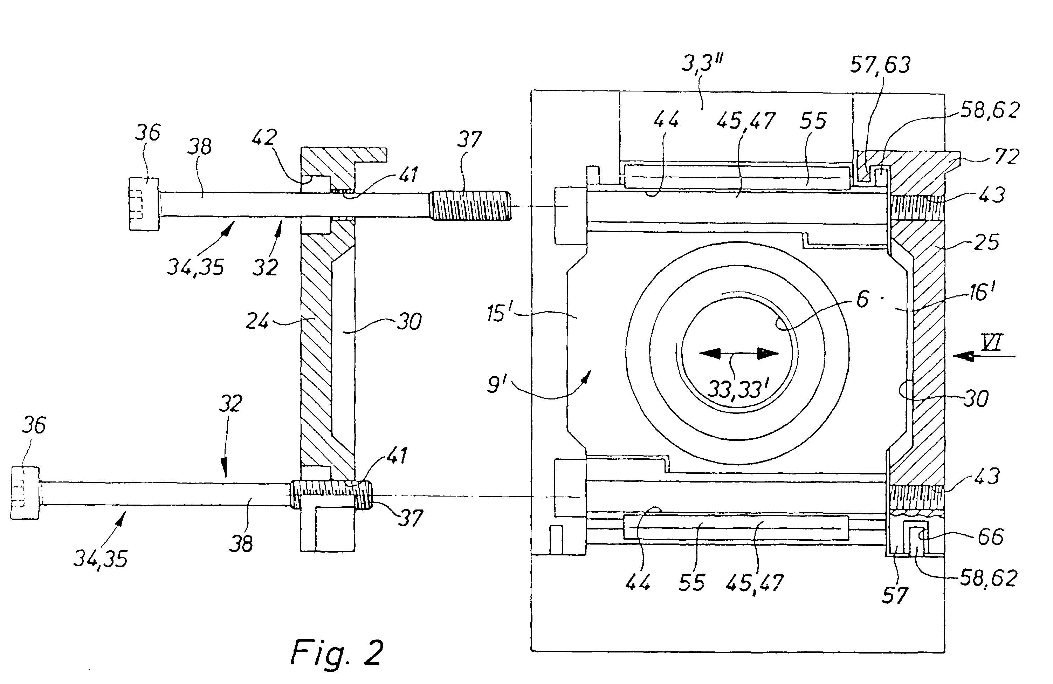

Bei zusammengefügten Körpern 3 ist an jedes dadurch vorliegende Haltepartiepaar 15, 15'; 16, 16' ein Verbindungsglied 24, 25 ansetzbar. Die im angesetzten Zustand eingenommene Stellung, die beispielsweise aus der rechten Hälte der Figur 2 sowie aus der Figur 5 hervorgeht, sei als Verbindungsstellung bezeichnet.

Jedes Verbindungsglied verfügt über zueinander beabstandete Gegen-Haltepartien 29, die in der Verbindungsstellung das zugeordnete Haltepartiepaar 15, 15'; 16, 16' im Bereich der ersten Beaufschlagungsflächen 18 übergreifen. Vorzugsweise handelt es sich bei den Verbindungsgliedern 24, 25 um stab- oder leistenähnliche Längselemente, die an einer Längsseite über eine taschenartige Vertiefung 30 verfügen, so daß seitliche Ränder verbleiben, die die Gegen-Haltepartien 29 bilden. Die an diesen Gegen-Haltepartien 29 vorgesehenen, die taschenartige Vertiefung 30 seitlich begrenzenden Seitenflächen bilden zweite Beaufschlagungflächen 19, die einen an den Schrägverlauf der ersten Beaufschlagungsflächen 18 angepaßten komplementären Schrägverlauf aufweisen. Erreicht wird diese Formgebung durch eine sich im Querschnitt zum Grund hin verjüngende Formgebung der taschenartigen Vertiefungen 30. Nimmt ein Verbindungsglied 24, 25 die Verbindungsstellung ein, liegt es mit seinen in Anbaurichtung 5 beabstandeten zweiten Beaufschlagungsflächen 19 an den zugeordneten ersten Beaufschlagungsflächen 18 an, was aus Figur 5 gut ersichtlich ist.

Um auch bei angesetzten Verbindungsgliedern 24, 25 einen möglichst glatten Übergang zwischen den Körperseiten 13, 14 zu erhalten, sind die Körper 3 an besagten Körperseiten 13, 14 so ausgebildet, daß im aneinandergesetzten Zustand von der Fügeebene 22 durchsetzte Oberflächenvertiefungen 31 vorliegen, in denen das zugeordnete Verbindungsglied insbesondere vollständig aufgenommen ist. Im Bereich der Haltepartien 15, 15'; 16, 16' sind die Körper 3 mit Ausnehmungen versehen, die sich im aneinander angesetzten Zustand zu den erwähnten Oberflächenvertiefungen 31 ergänzen.

Die die Verbindungsstellung einnehmenden Verbindungsglieder 24, 25 sind mittels einer Spanneinrichtung 32 in einer durch Doppelpfeil angedeuteten Spannrichtung 33 quer und insbesondere rechtwinkelig zur Anbaurichtung 5 mit dem jeweils zugeordneten Haltepartiepaar 15, 15'; 16, 16' verspannbar. Die Spannrichtung 33 fällt mit der Höhenrichtung der ein höckerartiges Gebilde ergebenden Haltepartiepaare 15, 15'; 16, 16' zusammen. Beispielsgemäß wird die Spannkraft dadurch ausgeübt, daß als Spanneinrichtung 32 zwei zugankerähnliche Spannelemente 34 vorgesehen sind, die sich im wirksamen Zustand im Fügebereich 10 durch die Anordnung von Körpern 3 hindurch erstrecken und gleichzeitig an beiden Verbindungsgliedern 24, 25 verankert sind, die durch die Spannelemente 34 gegeneinander gezogen werden. Durch das Gegeneinanderziehen wirken die Verbindungsglieder 24, 25 mit ihren zweiten Beaufschlagungsflächen 19 auf die ebenfalls schrägen ersten Beaufschlagungsflächen 18 der Haltepartiepaare 15, 15'; 16, 16' ein, so daß sich eine in Anbaurichtung 5 ausgerichtete Kraftkomponente ergibt, mit der die einander zugeordneten Haltepartien 15, 15'; 16, 16' und somit die beiden Körper 3 mit ihren Fügeflächen 9, 9' fest gegeneinander gedrückt werden. Da im Fügebereich 10 kein Zwischenelement zwischengefügt ist, ergibt sich eine unmittelbare und dadurch besonders sichere Verspannung bei gleichzeitig in Anbaurichtung 5 sehr kompakten Abmessungen der zusammengebauten Baugruppe.

Um eine Betätigung der Spannelemente 34 von den vorderen Körperseiten 13 her zu ermöglichen, sind sie beispielsgemäß als Spannschrauben 35 ausgeführt, die einen Schraubenkopf 36 und einen mit einem Gewinde 37 versehenen Schaft 38 aufweisen, wobei die Schaftlänge etwa der Breite der Körper 3 entspricht. Das der vorderen Körperseite 13 zugeordnete Verbindungsglied 24 verfügt über in Längsrichtung des Verbindungsgliedes 24 zueinander beabstandete Durchbrechungen 41, die an der vom Körper 3 wegweisenden Außenseite mit einer Erweiterung 42 versehen sind, die den jeweiligen Schraubenkopf 36 aufnimmt. Eine Engstelle der Durchbrechung 41 ist mit einem Innengewinde versehen, so daß die Spannschrauben 35 gemäß der Darstellung in der unteren Hälfte in der Figur 2 mit ihrem relativ kurzen stirnseitigen Gewinde hindurchschraubbar sind, bis der etwas dünnere Schaft 38 die Durchbrechung 41 durchsetzt. Auf diese Weise sind die Spannschrauben 35 verliergesichert am vorderen Verbindungsglied 24 gehalten.

Das rückseitige Verbindungsglied 25 verfügt über fluchtende Gewindebohrungen 43, die ein Einschrauben der Gewinde 37 der Spannschrauben 35 ermöglichen.

Desweiteren sind an den Körpern 3 Vorkehrungen getroffen, die bei aneinandergesetzten Körpern 3 im Fügebereich 10 zwei kanalartige Durchgänge 44 gewährleisten, die zu den beiden Körperseiten 13, 14 hin offen sind und mit den Durchbrechungen 41 bzw. den Gewindebohrungen 43 der in Verbindungsstellung befindlichen Verbindungsglieder 24, 25 fluchten. Die Durchgänge 44 ermöglichen den Durchgriff der Spannschrauben 35. Zweckmäßigerweise liegen sie auf bezüglich der Längsachse 23 bzw. dem Strömungskanal 6 einander diametral gegenüberliegenden Seiten, wobei sie in der gezeigten bevorzugten Gebrauchsstellung oberhalb und unterhalb des Strömungskanals 6 liegen und in Spannrichtung 33 ausgerichtet sind.

An den jeweils zu verbindenden Körpern 3 sind im Bereich ihrer Fügeflächen 9, 9' und dabei zweckmäßigerweise innerhalb des Fügebereiches 10 Kopplungsmittel 45, 46 vorgesehen, die noch vor dem Ansetzen der Verbindungsglieder 24, 25 eine Kopplung der Körper 3 in einer Weise ermöglichen, daß die Körper 3 in einer mit der Spannrichtung 33 zusammenfallenden Verschieberichtung 33' relativ zueinander verschiebbar und zugleich in Anbaurichtung 5 formschlüssig aneinander fixiert sind. Es ist also vor dem eigentlichen Verspannen eine Vorfixierung möglich, um die weitere Handhabung zu erleichtern. Um die Körper 3 in die vorfixierte Position zu bringen, werden die Körper 3 zunächst in eine rechtwinkelig zur Anbaurichtung 5 zueinander versetzte Position gebracht, wobei gleichzeitig eine Ausrichtung bezüglich der Kopplungsmittel 45, 46 erfolgt, um anschließend die beiden Körper 3 im Rahmen einer mit der Spannrichtung 33 zusammenfallenden Schiebebewegung aufeinander aufzuschieben, bis sie die gewünschte Lage mit zueinander fluchtenden Strömungskanälen 6 einnehmen. Dabei können nicht näher dargestellte Rastmittel vorgesehen sein, die die exakt mittige Zentrierung erleichtern.

Beim Ausführungsbeispiel sind an den einander zugewandten Fügeflächen 9, 9' der zu verbindenden Körper 3 jeweils zwei mit Abstand zueinander angeordnete, zueinander komplementäre Kopplungsmittel 45, 46 vorhanden, die von in Spannrichtung 33 ausgerichteten Schienenelementen 47, 48 gebildet sind. Bei ihnen handelt es sich zweckmäßigerweise um bezüglich des jeweils zugeordneten Körpers separate Bauteile, die lösbar am betreffenden Körper 3 fixiert sein können. Beispielsgemäß sind die Schienenelemente 47, 48 durch Rastverbindungseinrichtungen 51 an der Fügefläche 9, 9' festgelegt. Hierzu sind endseitig an den Schienenelementen 47, 48 von diesen in Querrichtung abstehende, seitlich elastisch bewegbare Rastzungen 49 angeformt, die einen Rastvorsprung tragen und die in eine Rastöffnung 50 der Fügefläche 9, 9' eingreifen und mit den Rastvorsprüngen eine Rastpartie der Rastöffnung 50 hintergreifen. Diese Anordnung kann selbstverständlich auch umgekehrt getroffen sein. Um eine exakte Ausrichtung der Schienenelemente 47, 48 zu erhalten, sitzen diese außerdem noch in sich in Spannrichtung 33 erstreckenden Haltenuten 53 ein, die in die Fügeflächen 9, 9' eingebracht sind. Die Schienenelemente 47, 48 sind zweckmässigerweise als einstückige, aus Kunststoffmaterial bestehende Bauteile ausgeführt.

Wie sich insbesondere aus Figur 4 ergibt, befinden sich an den einander zugeordneten Schienenelementen 47, 48 Kopplungspartien 54, 55, die sich im gekoppelten Zustand in Anbaurichtung 5 hintergreifen. Der Hintergriff ist so gewählt, daß eine relative Verschiebebewegung in Längsrichtung möglich ist. Die einander zugeordneten Kopplungspartien 54, 55 weisen hierzu miteinander kooperierende Gleitflächen 56 auf. Die Anordnung kann insbesondere so getroffen sein, daß die Kopplungspartien 54, 55 der beiden Paare von Schienenelementen 47, 48 schwalbenschwanzartig ineinandergreifen und aneinander verschiebbar geführt sind.

Die gestalterische Abstimmung der zusammenarbeitenden Kopplungspartien 54, 55 wird zweckmäßigerweise so getroffen, daß die durch sie formschlüssig vorfixierten Körper 3 vor dem Anbringen und Betätigen der Spanneinrichtung 32 in Anbaurichtung 5 spielbehaftet aneinander festgelegt sind. Dadurch ist gewährleistet, daß sich die Körper 3 verhältnismäßig leichtgängig aufeinanderschieben lassen und daß auch die geringfügig über die eine Fügefläche 9' vorstehende Dichtung 11 nicht abgeschert wird. Im aufgeschobenen Zustand bewirkt dann die leichte Vorspannung der Dichtung 11 eine gewisse kraftschlüssige Lagefixierung in der mit der Spannrichtung 33 zusammenfallenden Schieberichtung 33'.

Um eine Beschädigung der Dichtung 11 zu vermeiden, kann zusätzlich oder alternativ der der Dichtung 11 gegenüberliegende Körper 3 an mindestens einem seiner in Verschieberichtung 33' weisenden Randbereiche der Fügefläche 9 abgeschrägt sein. Entsprechende Abschrägungen sind in Figur 5 bei 56 angedeutet.

Beim Ausführungsbeispiel ist ferner vorgesehen, daß die Schienenelemente 47, 48 so ausgebildet sind, daß sie im gekoppelten Zustand jeweils eine Durchführöffnung definieren, die einen der oben erwähnten Durchgänge 44 darstellt, durch den die zugeordnete Spannschraube 45 hindurchführbar ist. Auf diese Weise erübrigt sich in den Körpern 3 selbst die Ausformung der entsprechenden Durchgänge 44. Jedes Schienenelement 47, 48 kann eine rinnenartige Vertiefung aufweisen, die sich mit der rinnenartigen Vertiefung des jeweils zugeordneten Schienenelements zu einem Durchgang 44 ergänzt.

Zur weiteren Erleichterung der Montage der Baugruppe ist vorgesehen, daß das den rückwärtig orientierten Körperseiten 14 zugeordnete Verbindungsglied 25 über erste Halte- und Sicherungsmittel 57 verfügt, die in der Verbindungsstellung mit an der zugeordneten Körperseite 14 der Körper 3 vorgesehenen zweiten Halte- und Sicherungsmitteln 58 in besonderer Weise zusammenwirken. Dieses Zusammenwirken zeichnet sich dadurch aus, daß sich das betreffende Verbindungsglied 25 schon vor der Betätigung der Spanneinrichtung 32 in der Verbindungsstellung fixieren läßt und dabei gleichzeitig eine Verschiebesicherung zwischen den über die Kopplungsmittel 45, 46 vorfixierten Körpern 3 bewirkt. Dadurch ist zum einen gewährleistet, daß die vorfixierten Körper 3 ihre fluchtende Ausrichtung auch dann beibehalten, wenn sie im Laufe der Montage in eine geneigte Position verbracht werden, bei der die Spannrichtung 33 und somit die entsprechend gerichtete Verschieberichtung 33' bezüglich der Horizontalen geneigt verläuft. Außerdem erhält man eine Fixierung des Verbindungsgliedes 25 dergestalt, daß es beim Ansetzen des Gewindes 37 der Spannschrauben 35 nicht aus der Verbindungsstellung herausgedrückt wird, so daß man die Spannschrauben 35 ansetzen und einschrauben kann, ohne das die Innengewinde 43 aufweisende Verbindungsglied 25 zusätzlich mit einer Hand festhalten zu müssen.

In bevorzugter Bauweise sind die Halte- und Sicherungsmittel 57, 58 sowohl des Verbindungsgliedes 25 als auch der Körper 3 in baulicher und damit funktioneller Einheit ausgeführt. Die Haltefunktion und die Sicherungsfunktion wird auf diese Weise von ein und denselben Bauteilen erfüllt.

Die an den Körpern 3 vorgesehenen zweiten Halte- und Sicherungsmittel 58 sind beim Ausführungsbeispiel jeweils als zum Beispiel rippenähnliche Vorsprünge 62 ausgeführt, die sich quer und insbesondere rechtwinkelig zur Spannrichtung 33 beziehungsweise der mit dieser zusammenfallenden Verschieberichtung 33' erstrecken. Jeder Körper 3 verfügt an der betreffenden Körperseite 14 im Bereich beider Fügeflächen 9, 9' über vorzugsweise zwei zweite Halte- und Sicherungsmittel 58, die in Höhenrichtung 17 zueinander beabstandet am jeweiligen Körper 3 angeordnet sind. Die Anordnung ist ferner so getroffen, daß sich jeweils zwei auf gleicher Höhe befindliche zweite Halte- und Sicherungsmittel 58 bei aneinandergesetzten Körpern 3 paarweise gegenüberliegen, was die Figur 6 zum Ausdruck bringt. An dem Längserstreckung aufweisenden Verbindungsglied 25 sind entsprechend mehrere in Längsrichtung beabstandet zueinander angeordnete komplementäre erste Halte- und Sicherungsmittel 57 vorhanden. Sie hintergreifen in der Verbindungsstellung die an den Körpern vorgesehenen zweiten Halte- und Sicherungsmittel 58 quer zur Spannrichtung 33 bzw. Verschieberichtung 33'. Das Verbindungsglied 25 ist somit als Riegelglied ausgebildet, welches in der Verbindungsstellung die vorfixierte Position der Körper 3 verriegelt.

Im einzelnen ist beim Ausführungsbeispiel das obere erste Halte- und Sicherungsmittel 57 des Verbindungsgliedes 25 als sich in Richtung des Körpers und nach unten erstreckende Hakenpartie 63 ausgebildet, die in der Verbindungsstellung gleichzeitig die zugeordneten zweite Halte- und Sicherungsmittel 58 beider Körper 3 hintergreift. Letztere greifen dabei in eine nutartige Vertiefung 64 des Verbindungsgliedes 25 ein, so daß eine vorzugsweise spielbehaftete formschlüssige Fixierung erfolgt.

An der Unterseite des Verbindungsgliedes 25 sind zwei als Nasen 65 ausgebildete erste Halte- und Sicherungsmittel 57 vorgesehen, die in der Verbindungsstellung jeweils eines der von Vorsprüngen 62 gebildeten zweiten Halte- und Sicherungsmittel 58 der Körper 3 hintergreift. Die Vorsprünge 62 greifen dabei in Ausnehmungen 66 des Verbindungsgliedes 25 ein, die von den Nasen 65 begrenzt sind. Auch das Zusammenwirken der unteren ersten und zweiten Halte- und Sicherungsmittel 57, 58 kann in Verschieberichtung 33' leicht spielbehaftet sein, insbesondere um das Ansetzen des Verbindungsgliedes 25 zu erleichtern.

Wie aus Figur 2 gut ersichtlich ist, befinden sich die oberen ersten und zweiten Halte- und Sicherungsmittel 57, 58 oberhalb der Haltepartien und Gegen-Haltepartien, währende die unteren ersten und zweiten Halte- und Sicherungsmittel 57, 58 unterhalb der Haltepartien und der Gegen-Haltepartien angeordnet sind. Bevorzugt sind sie im Bereich der Gewindebohrungen 53 plaziert, so daß eine optimale Abstützung erfolgt, wenn die Spannschrauben 35 angesetzt werden.

Aus Figur 3 geht hervor, wie sich das Verbindungsglied 25 am einfachsten in die Verbindungsstellung einsetzen läßt. Das Verbindungsglied 25 wird in Schräglage mit seinen unteren ersten Halte- und Sicherungsmitteln 57 an die unteren zweiten Halteund Sicherungsmittel 58 der Körper 3 angesetzt. Dabei ist das Verbindungsglied 25 zunächst noch leicht angehoben. Es wird dann im Rahmen einer durch Pfeil 67 verdeutlichten Einschwenkbewegung in eine Grundstellung verschwenkt, die in Figur 3 in durchgezogenen Linien gezeigt ist. Dabei nimmt das Verbindungsglied 25 bereits die auch in der Verbindungsstellung vorhandene Ausrichtung bezüglich der Körper 3 ein, die oben liegenden ersten und zweiten Halte- und Sicherungsmittel 57, 58 hintergreifen sich jedoch noch nicht. Im nächsten Schritt wird das Verbindungsglied 25 aus der noch etwas angehobenen Grundstellung nach unten in die Verbindungsstellung verlagert bzw. verschoben. Man könnte daher das Verbindungsglied 25 auch als Schiebe-Riegelglied bezeichnen. Aufgrund des vorhandenen Spiels bedarf es zur Veranlassung der Schiebebewegung keiner besonderen Kraftanstrengung, es genügt vielmehr, das Verbindungsglied 25 loszulassen, so daß es aufgrund seines Eigengewichts in die Verbindungsstellung bewegt und in dieser gehalten wird.

Es versteht sich, daß die Einschwenkbewegung 67 auch entfallen kann, wenn die Abstimmung der ersten und zweiten Halte- und Sicherungsmittel unter Berücksichtigung der Abmessungen der Haltepartien 15, 15'; 16, 16' und der Gegen-Haltepartien 29 so getroffen ist, daß das Verbindungsglied 25 parallel in Verschieberichtung 33' in die Grundstellung verbringbar und anschließend absenkbar ist.

Um die Körper 3 mit beliebiger Ausrichtung koppeln zu können, sind auch im Bereich der vorderen Körperseiten 13 vergleichbare zweite Halte- und Sicherungsmittel 58 vorhanden. Sie treten allerdings beim Ausführungsbeispiel nicht in Funktion, da das zugeordnete vordere Verbindungsglied 24 keine ersten Halte- und Sicherungsmittel 57 aufweist. Letzteres ermöglicht es, das Verbindungsglied 24 ausschließlich im Rahmen einer parallel zur Verschieberichtung 33' verlaufenden Ansetzbewegung in die Verbindungsstellung zu verbringen, so daß die verliersicher vormontierten Spannschrauben 35 bei dem Ansetzvorgang nicht hinderlich sind. Insbesondere bei nicht vormontierten Spannschrauben 35 könnte aber auch das vordere Verbindungsglied 24 mit den beschriebenen ersten Halte- und Sicherungsmitteln 57 ausgestattet sein.

Um das vordere Verbindungsglied 24 exakt in der Verbindungsstellung positionieren zu können, verfügt es jedoch zweckmäßigerweise über rechtwinkelig zur Verschieberichtung 33' und beispielsgemäß in Höhenrichtung 17 nach unten weisende Positionierflächen 68, mit denen es im angesetzten Zustand an entgegengesetzt gerichteten körperfesten Gegenpositionierflächen 68' anliegt. Dadurch wird seine relative Höhenlage bezüglich der Körper 3 vorgegeben. Beispielsgemäß sind im Bereich der Oberseite und im Bereich der Unterseite des Verbindungsgliedes 24 Positionierflächen 68 vorhanden, wobei die untere Positionierfläche 68 an der Stirnseite des Verbindungsgliedes 24 und die obere Positionierfläche 68 an der Unterseite eines zum anderen Verbindungsglied 25 hin wegragenden Vorsprunges 62 vorgesehen ist.

Das rückwärtige Verbindungsglied 25 verfügt ebenfalls über Positionierflächen 68 der erwähnten Art, wobei die oberen Positionierflächen 68 zweckmäßigerweise an der vorspringenden Hakenpartie 63 vorgesehen sind.

Das mit Halte- und Sicherungsmitteln 57 versehene Verbindungsglied 25 verfügt zweckmäßigerweise ergänzend über eine Handhabungspartie 72, die es insbesondere erleichtert, das Verbindungsglied 25 im Falle einer Demontage aus der Verbindungsstellung auszuheben. Die Handhabungspartie 72 kann beispielsweise von einem im Bereich der Rückseite angeformten Vorsprung gebildet sein.

Beide Verbindungsglieder 24, 25 sind also zweckmäßigerweise als Einhängeelemente ausgeführt, wobei wenigstens eines (25) dieser Verbindungsglieder so einhängbar ist, daß es nicht nur in Höhenrichtung 17, sondern gleichzeitig auch in Verschieberichtung 33' an den Körpern 3 gehalten ist.

## Patentansprüche

1. Anordnung aus zwei Körpern einer insbesondere fluiddurchströmten Baugruppe, insbesondere einer modular aufgebauten Einrichtung zur Druckluftaufbereitung, und einer Verbindungseinrichtung für die zwei Körper mit an quer zur Anbaurichtung (5) der Körper (3) einander entgegengesetzten Körperseiten (13, 14) befindlichen, bei aneinandergesetzten Körpern (3) einander paarweise zugeordneten Haltepartien (15, 15'; 16, 16'), und mit in einer Verbindungsstellung an die Paare zugeordneter Haltepartien (15, 15'; 16, 16') ansetzbaren Verbindungsgliedern (24, 25), die mittels einer Spanneinrichtung (32) in einer quer zur Anbaurichtung (5) verlaufenden Spannrichtung (33) mit dem jeweils zugeordneten Paar von Haltepartien (15, 15'; 16, 16') verspannbar sind, um zu bewirken, daß die Körper (3) im Bereich ihrer einander zugewandten Fügeflächen (9, 9') gegeneinander gespannt werden, **dadurch gekennzeichnet, daß** an den beiden Körpern (3, 3', 3'') im Bereich ihrer einander zugewandten Fügeflächen (9, 9') Kopplungsmittel (45, 46) vorgesehen sind, die vor dem Ansetzen der Verbindungsglieder (24, 25) eine Kopplung der Körper (3, 3', 3'') in einer Weise ermöglichen, daß die Körper (3, 3', 3'') in der Spannrichtung (33) relativ zueinander verschiebbar und zugleich in Anbaurichtung (5) formschlüssig aneinander fixiert sind, und daß an wenigstens einem der Verbindungsglieder (25) und an der diesem zugewandten Körperseite (14) der Körper (3, 3', 3'') Halte- und Sicherungsmittel (57, 58) vorgesehen sind, die bei in Verbindungsstellung befindlichem Verbindungsglied (25) derart zusammenwirken, daß das Verbindungsglied (25) schon vor der Betätigung der Spanneinrichtung (32) an den Körpern (3, 3', 3'') gehalten ist und dabei gleichzeitig eine Verschiebesicherung zwischen den beiden Körpern (3, 3', 3'') bewirkt.

2. Anordnung nach Anspruch 1, **dadurch gekennzeichnet, daß** die Halte- und Sicherungsmittel (57, 58) als bauliche Einheit ausgeführt sind.

3. Anordnung nach Anspruch 1 oder 2, **dadurch gekennzeichnet, daß** das mit Halte- und Sicherungsmitteln (57) versehene Verbindungsglied (25) als Riegelglied ausgebildet ist, dessen Halte- und Sicherungsmittel (57) die an den Körpern (3, 3', 3'') angeordneten Halte- und Sicherungsmittel (58) in der Verbindungsstellung quer zur Spannrichtung (33) hintergreifen.

4. Anordnung nach Anspruch 3, **dadurch gekennzeichnet, daß** das Riegelglied als in eine Grundstellung an die zu verbindenden Körper (3, 3', 3'') ansetzbares und durch eine anschließende Verlagerungsbewegung in die Verbindungsstellung verlagerbares Schiebe-Riegelglied ausgebildet ist.

5. Anordnung nach Anspruch 4, **dadurch gekennzeichnet, daß** die Verlagerungsrichtung parallel zur Fügeebene (22) und zu den die Halte- und Sicherungsmittel (58) aufweisenden Körperseiten (14) der zu verbindenden Körper (3, 3', 3'') verläuft.

6. Anordnung nach Anspruch 4 oder 5, **dadurch gekennzeichnet, daß** das die Halte- und Sicherungsmittel (57) aufweisende Verbindungsglied (25) so ausgebildet ist, daß es im Rahmen einer Einschwenkbewegung (67) in der Grundstellung positionierbar ist.

7. Anordnung nach einem der Ansprüche 3 bis 6, **dadurch gekennzeichnet, daß** das Verbindungsglied (25), in Gebrauchslage der Körper (3, 3', 3'') gesehen, von oben her in die Verbindungsstellung einführbar ist und in dieser aufgrund seines Eigengewichtes verbleibt.

8. Anordnung nach einem der Ansprüche 1 bis 7, **dadurch gekennzeichnet, daß** die am Verbindungsglied (25) vorgesehenen Halte- und Sicherungsmittel (57) von wenigstens einer Hakenpartie (63) gebildet sind, die in der Verbindungsstellung mindestens einen zu den körperseitigen Halte- und Sicherungsmittel (58) gehörenden Vorsprung (62) hintergreift.

9. Anordnung nach einem der Ansprüche 1 bis 8, **dadurch gekennzeichnet, daß** das mindestens eine Verbindungsglied (57) als Längselement ausgeführt ist und über mehrere in Längsrichtung beabstandet zueinander angeordnete Halte- und Sicherungsmittel (57) verfügt.

10. Anordnung nach einem der Ansprüche 1 bis 9, **dadurch gekennzeichnet, daß** die Haltepartien (15, 15'; 16, 16') von an den Körpern (3, 3', 3 ") vorgesehenen Vorsprüngen gebildet sind, die in Verbindungsstellung der Verbindungsglieder (24, 25) von an diesen vorgesehenen Gegen-Haltepartien (29) übergriffen werden.

11. Anordnung nach Anspruch 10, **dadurch gekennzeichnet, daß** die Gegen-Haltepartien (29) von seitlichen Begrenzungen taschenartiger Vertiefungen (30) der Verbindungsglieder (24, 25) gebildet sind.

12. Anordnung nach Anspruch 10 oder 11, **dadurch gekennzeichnet, daß** die Haltepartien (15, 15'; 16, 16') und/oder die Gegen-Haltepartien (29) über vom jeweils anderen Teil beaufschlagte, geneigt zur Trägerebene verlaufende Beaufschlagungsflächen (18, 19) verfügen.

13. Anordnung nach einem der Ansprüche 1 bis 12, **dadurch gekennzeichnet, daß** die Spanneinrichtung (32) wenigstens ein und zweckmäßigerweise zwei Spannelemente (34) aufweist, die im wirksamen Zustand den Fügebereich (10) zwischen den beiden Körpern (3, 3', 3'') durchsetzen und an beiden Verbindungsgliedern (24, 25) angreifen.

14. Anordnung nach Anspruch 13, **dadurch gekennzeichnet, daß** die Spannelemente (34) als Spannschrauben (35) ausgeführt sind, die über ein Gewinde (37) verfügen, mit dem sie im wirksamen Zustand in Gewindebohrungen (43) des mindestens einen mit Halte- und Sicherungsmitteln (57) versehenen Verbindungsgliedes (25) eingeschraubt sind.

15. Anordnung nach Anspruch 13 oder 14, **dadurch gekennzeichnet, daß** die Spannelemente (34) als Spannschrauben (35) ausgeführt sind und über einen Kopf (36) verfügen, mit dem sie sich im wirksamen Zustand an einem keine Halte- und Sicherungsmittel aufweisenden Verbindungsglied (24) abstützen, an dem sie außerdem zweckmäßigerweise unverlierbar gehalten sind.

16. Anordnung nach einem der Ansprüche 1 bis 15, **dadurch gekennzeichnet, daß** die Verbindungsglieder (24, 25) in der Verbindungsstellung in von den beiden Körpern gemeinsam gebildeten Vertiefungen (31) aufgenommen sind.

17. Anordnung nach einem der Ansprüche 1 bis 16, **dadurch gekennzeichnet, daß** wenigstens einer der Körper (3, 3') an mindestens einem der in Spannrichtung weisenden Randbereiche seiner Fügefläche (9) abgeschrägt ist.

18. Anordnung nach einem der Ansprüche 1 bis 17, **dadurch gekennzeichnet, daß** die Kopplungsmittel (45, 46) derart aufeinander abgestimmt sind, daß die durch sie formschlüssig gekoppelten Körper (3, 3', 3'') in Anbaurichtung (5) spielbehaftet aneinander festgelegt sind.

19. Anordnung nach einem der Ansprüche 1 bis 18, **dadurch gekennzeichnet, daß** die an den beiden Körpern (3, 3', 3'') vorgesehenen Kopplungsmittel (45, 46) sich in Spannrichtung (33) erstreckende, im gekoppelten Zustand einander in Anbaurichtung (5) hintergreifende Kopplungspartien (54, 55) aufweisen.

20. Anordnung nach Anspruch 19, **dadurch gekennzeichnet, daß** die Kopplungspartien (54, 55) an paarweise zusammenwirkenden, in Spannrichtung (33) ausgerichteten Schienenelementen (47, 48) vorgesehen sind.

21. Anordnung nach Anspruch 20, **dadurch gekennzeichnet, daß** die Schienenelemente (47, 48) bezüglich des jeweils zugeordneten Körpers (3, 3', 3'') als separate und austauschbare Bauteile ausgebildet sind.

22. Anordnung nach Anspruch 20 oder 21, **dadurch gekennzeichnet, daß** die Schienenelemente (47, 48) durch Rastverbindungseinrichtungen (51) am jeweils zugeordneten Körper (3, 3', 3'') festgelegt sind.

23. Anordnung nach einem der Ansprüche 20 bis 22, **dadurch gekennzeichnet, daß** die Schienenelemente (47, 48) so ausgebildet sind, daß sie im gekoppelten Zustand wenigstens eine sich in Spannrichtung (33) erstreckende Durchführöffnung (44) für ein gleichzeitig an beiden Verbindungsgliedern (24, 25) angreifendes Spannelement (34) vorgeben.

## Claims

1. Assembly comprised of two bodies of a sub-assembly, in particular one through which fluid flows, in particular a modular unit for compressed air preparation, and a connection device for the two bodies, with retaining sections (15, 15'; 16, 16') assigned in pairs to bodies (3) placed together and located on opposite body sides (13,14) at right-angles to the direction of attachment (5) of the bodies (3), and with connecting elements (24, 25) attachable in a connecting position to the pairs of assigned retaining sections (15, 15'; 16, 16') and capable of being clamped by means of a clamping device (32) to the respectively assigned pair of retaining sections (15, 15'; 16, 16') in a clamping direction (33) running at right-angles to the direction of attachment (5), in order to clamp the bodies (3) together in the area of their opposing joining faces (9, 9'), **characterised in that** there are provided on the two bodies (3,3', 3") in the area of their opposing joining faces (9, 9') coupling means (45, 46) which, before attachment of the connecting elements (24, 25), allow coupling of the bodies (3, 3', 3") in such a way that in the clamping direction (33) the bodies (3, 3', 3") are fixed so as to be capable of sliding relative to one another while at the same time being fixed positively in the direction of attachment (5), and that on at least one of the connecting elements (25) and on the body side (14) of the bodies (3, 3', 3") facing this connecting element there are provided holding and securing means (57, 58) which, with the connecting element (25) in the connecting position, act together in such a way that the connecting element (25) is held on the bodies (3, 3', 3") even before the clamping device (32) is actuated, while at the same time preventing displacement between the two bodies (3, 3', 3").

2. Assembly according to claim 1, **characterised in that** the holding and securing means (57, 58) are designed as a structural unit.

3. Assembly according to claim I or 2, **characterised in that** the connecting element (25) provided with holding and securing means (57) is in the form of a bolt member, with holding and securing means (57) which, in the connecting position, engage behind the holding and securing means (58) fitted to the bodies (3, 3', 3") at right-angles to the clamping direction (33).

4. Assembly according to claim 3, **characterised in that** the bolt member is in the form of a sliding bolt member which may be attached to the bodies (3, 3', 3") to be connected in a basic position, and moved into the connecting position in a subsequent displacement movement.

5. Assembly according to claim 4, **characterised in that** the direction of displacement runs parallel to the joining plane (22) and to the body sides (14) of the bodies (3, 3', 3") to be connected which have the holding and securing means (58).

6. Assembly according to claim 4 or 5, **characterised in that** the connecting element (25) with the holding and securing means (57) is so designed that it may be positioned in the basic position in the course of a swivelling-in movement (67).

7. Assembly according to any of claims 3 to 6, **characterised in that** the connecting element (25), viewed in the position of use of the bodies (3, 3', 3"), may be guided into the connecting position from above and remains in this position due to its intrinsic weight.

8. Assembly according to any of claims 1 to 7, **characterised in that** the holding and securing means (57) provided on the connecting element (25) are formed by one or more hook sections (63) which, in the connecting position, engage behind one or more projections (62) belonging to the body-side holding and securing means (58).

9. Assembly according to any of claims 1 to 8, **characterised in that** the connecting element or elements (57) is or are in the form of a longitudinal element or elements and have several holding and securing means (57) spaced apart longitudinally.

10. Assembly according to any of claims 1 to 9, **characterised in that** the retaining sections (15, 15'; 16, 16') are formed by projections provided on the bodies (3, 3', 3") and overlapped in the connecting position of the connecting elements (24, 25) by mating retaining sections (29) provided on the connecting elements.

11. Assembly according to claim 10, **characterised in that** the mating retaining sections (29) are formed by side boundaries of pocket-like recesses (30) of the connecting elements (24, 25).

12. Assembly according to claim 10 or 11, **characterised in that** the retaining sections (15, 15'; 16, 16') and/or the mating retaining sections (29) have pressure-loading surfaces (18, 19), each under pressure from the other part, running at an angle to the plane of support.

13. Assembly according to any of claims 1 to 12, **characterised in that** the clamping device (32) has at least one and expediently two clamping elements (34), which in the operative state pass through the joining zone (10) between the two bodies (3, 3', 3") and act on both connecting elements (24, 25).

14. Assembly according to claim 13, **characterised in that** the clamping elements (34) are in the form of locking bolts (35) which have a thread (37) by which in the operative state they are screwed into tapped holes (43) of the connecting element or elements (25) provided with holding and securing means (57).

15. Assembly according to claim 13 or 14, **characterised in that** the clamping elements (34) are in the form of locking bolts (35) and have a head (36) by which in the operative state they rest on a connecting element (24) with no holding and securing means, on which they are also expediently held captive.

16. Assembly according to any of claims 1 to 15, **characterised in that** in the connecting position the connecting elements (24, 25) are located in recesses (31) formed by the two bodies together.

17. Assembly according to any of claims 1 to 16, **characterised in that** at least one of the bodies (3, 3') is chamfered on at least one of the edge zones of its joining face (9) which faces in the direction of clamping.

18. Assembly according to any of claims 1 to 17, **characterised in that** the coupling means (45, 46) are so matched that the bodies (3, 3', 3") positively coupled by them are fixed to one another with play in the direction of attachment (5).

19. Assembly according to any of claims 1 to 18, **characterised in that** the coupling means (45, 46) provided on the two bodies (3, 3', 3") have coupling sections (54, 55) extending in the clamping direction (33) and, in the coupled state, engaging one another from behind in the direction of attachment (5).

20. Assembly according to claim 19, **characterised in that** the coupling sections (54, 55) are provided on rail elements (47, 48) aligned in the clamping direction (33) and acting in pairs.

21. Assembly according to claim 20, **characterised in that** the rail elements (47, 48) are designed as separate and replaceable components relative to the respectively assigned body (3, 3', 3").

22. Assembly according to claim 20 or 21, **characterised in that** the rail elements (47, 48) are fixed to the respectively assigned body (3, 3', 3") by snap-in connection devices (51).

23. Assembly according to any of claims 20 to 22, **characterised in that** the rail elements (47, 48) are so designed that in the coupled state they preset at least one feed-through hole (44) extending in the clamping direction (33), for a clamping element (34) acting simultaneously on both connecting elements (24, 25).

## Revendications

1. Agencement composé de deux corps d'un ensemble plus particulièrement traversé par un fluide, en particulier d'un dispositif de construction modulaire pour la préparation d'air comprimé, et d'un dispositif de liaison pour les deux corps, avec des parties de maintien (15, 15" ; 16, 16') situées sur des côtés (13, 14) des corps mutuellement opposés transversalement à la direction de montage (5) des corps (3) et associées par paires quand les corps sont montés l'un contre l'autre, et avec des organes de liaison (24, 25) pouvant être rapportés dans une position de liaison sur les paires de parties de maintien (15, 15' ; 16, 16') associées, organes qui peuvent être serrés avec la paire respectivement associée de parties de maintien (15, 15' ; 16, 16') au moyen d'un dispositif de serrage (32) dans une direction de serrage (33) s'étendant transversalement à la direction de montage (5), afin de provoquer le serrage mutuel des corps (3) au niveau de leurs surfaces de jonction (9, 9') en vis-à-vis, **caractérisé en ce qu'**il est prévu sur les deux corps (3, 3', 3"), au niveau de leurs surfaces de jonction (9, 9') en vis-à-vis, des moyens de couplage (45, 46) qui permettent un couplage des corps (3, 3', 3") avant la mise en place des organes de liaison (24, 25) de telle manière que les corps (3, 3', 3") soient mobiles l'un par rapport à l'autre dans la direction de serrage (33) et simultanément fixés l'un contre l'autre par engagement positif dans la direction de montage (5), et **en ce qu'**il est prévu, sur au moins l'un des organes de liaison (25) et sur le côté (14) des corps (3, 3',3") tourné vers celui-ci ; des moyens de maintien et d'immobilisation (57, 58) qui, quand l'organe de liaison (25) se trouve dans la position de liaison, coopèrent de telle manière que l'organe de liaison (25) est tenu contre les corps (3, 3', 3") avant même l'actionnement du dispositif de serrage (32) et provoque simultanément une immobilisation entre les deux corps (3, 3', 3").

2. Agencement selon la revendication 1, **caractérisé en ce que** les moyens de maintien et d'immobilisation (57, 58) sont réalisés sous la forme d'une unité constructive.

3. Agencement selon la revendication 1 ou 2, **caractérisé en ce que** l'organe de liaison (25) muni de moyens de maintien et d'immobilisation (57) est conformé en organe de régulation dont les moyens de maintien et d'immobilisation (57) saisissent par l'arrière les moyens de maintien et d'immobilisation (58) placés sur les corps (3, 3', 3") dans la position de liaison transversalement à la direction de serrage (33).

4. Agencement selon la revendication 3, **caractérisé en ce que** l'organe de régulation est conformé en organe de régulation mobile pouvant se placer dans une position de base contre les corps (3, 3', 3") à relier et pouvant être amené dans la position de liaison par un déplacement ultérieur.

5. Agencement selon la revendication 4, **caractérisé en ce que** la direction de déplacement est parallèle au plan de jonction (22) et aux côtés (14) des corps (3, 3', 3") à relier présentant les moyens de maintien et d'immobilisation (58).

6. Agencement selon la revendication 4 ou 5, **caractérisé en ce que** l'organe de liaison (25) présentant les moyens de maintien et d'immobilisation (57) est conformé en sorte qu'il soit positionnable dans la position de base dans le cadre d'un mouvement de pivotement (67).

7. Agencement selon l'une des revendications 3 à 6, **caractérisé en ce que** l'organe de liaison (25), vu dans la position d'utilisation du corps (3, 3', 3"), peut être introduit par le haut dans la position de liaison et reste dans celle-ci sous l'effet de son propre poids.

8. Agencement selon l'une des revendications 1 à 7, **caractérisé en ce que** les moyens de maintien et d'immobilisation (57) prévus sur l'organe de liaison (25) sont formés d'au moins une partie en crochet (63) qui, dans la position de liaison, saisit par l'arrière au moins une saillie (62) appartenant aux moyens de maintien et d'immobilisation (58) côté corps.

9. Agencement selon l'une des revendications 1 à 8, **caractérisé en ce que** l'organe de liaison (57) au nombre d'au moins un est conformé en élément oblong et dispose de plusieurs moyens de maintien et d'immobilisation (57) placés à distance les uns des autres dans la direction longitudinale.

10. Agencement selon l'une des revendications 1 à 9, **caractérisé en ce que** les parties de maintien (15,15' ; 16, 16') sont formées par des saillies prévues sur les corps (3, 3', 3"), qui sont saisies par le dessus dans la position de liaison des organes de liaison (24, 25) par des contreparties de maintien (29) prévues sur ceux-ci.

11. Agencement selon la revendication 10, **caractérisé en ce que** les contreparties de maintien (29) sont formées par des limitations latérales de renfoncements (30) en forme de poches des organes de liaison (24, 25).

12. Agencement selon la revendication 10 ou 11, **caractérisé en ce que** les parties de maintien (15, 15' ; 16, 16') et/ou les contreparties de maintien (29) disposent de surfaces de charge (18, 19) inclinées par rapport au plan du support et chargées à chaque fois par l'autre pièce.

13. Agencement selon l'une des revendications 1 à 12, **caractérisé en ce que** le dispositif de serrage (32) présente au moins et de préférence deux éléments de serrage (34) qui, à l'état actif, traversent la zone de jonction (10) entre les deux corps (3, 3', 3") et se mettent en prise sur les deux organes de liaison (24, 25).

14. Agencement selon la revendication 13, **caractérisé en ce que** les éléments de serrage (34) sont conformés en vis de serrage (35) qui disposent d'un filetage (37) avec lequel elles sont vissées à l'état actif dans des trous filetés (43) de l'organe de liaison (25) au nombre d'au moins un et muni de moyens de maintien et d'immobilisation (57).

15. Agencement selon la revendication 13 ou 14, **caractérisé en ce que** les éléments de serrage (34) sont conformés en vis de serrage (35) et disposent d'une tête en appui à l'état actif contre un organe de liaison (24) ne présentant pas de moyens de maintien et d'immobilisation, contre lequel ils sont tenus en outre, de manière avantageuse, de façon imperdable.

16. Agencement selon l'une des revendications 1 à 15, **caractérisé en ce que** les organes de liaison (24, 25) sont logés, dans la position de liaison, dans des renfoncements (31) formés en commun par les deux corps.

17. Agencement selon l'une des revendications 1 à 16, **caractérisé en ce qu'**au moins l'un des corps (3, 3') est biseauté sur au moins l'une des parties bords de sa surface de jonction (9) tournée dans la direction de serrage.

18. Agencement selon l'une des revendications 1 à 17, **caractérisé en ce que** les moyens de couplage (45, 46) sont ajustés entre eux de telle manière que les corps (3, 3', 3"), couplés par eux par engagement positif, sont fixés l'un contre l'autre avec du jeu dans la direction de montage (5).

19. Agencement selon l'une des revendications 1 à 18, **caractérisé en ce que** les moyens de couplage (45, 46) prévus sur les deux corps (3, 3', 3") présentent des parties de couplage (54, 55) s'étendant dans la direction de serrage (33) et se saisissant mutuellement par l'arrière dans la direction de montage (5) à l'état couplé.

20. Agencement selon la revendication 19, **caractérisé en ce que** les parties de couplage (54, 55) sont prévues sur des éléments à rail (47, 48) coopérant par paires et dirigés dans la direction de serrage (33).

21. Agencement selon la revendication 20, **caractérisé en ce que** les éléments à rail (47, 48) sont conformés, par rapport au corps (3, 3', 3") associé, en composants séparés et remplaçables.

22. Agencement selon la revendication 20 ou 21, **caractérisé en ce que** les éléments à rail (47, 48) sont fixés contre le corps respectif associé (3, 3', 3") par des dispositifs de liaison par fiche (51).

23. Agencement selon l'une des revendications 20 à 22, **caractérisé en ce que** les éléments à rail (47, 48) sont conformés de telle manière qu'à l'état couplé, ils définissent au moins une ouverture (44) s'étendant dans la direction de serrage (33) pour un élément de serrage (34) se mettant en prise simultanément sur les deux organes de liaison (24, 25).
